(19)

**Europäisches Patentamt**
**European Patent Office**
**Office européen des brevets**

(11) **EP 4 718 045 A1**

(12) # EUROPEAN PATENT APPLICATION

(43) Date of publication:
**01.04.2026 Bulletin 2026/14**

(21) Application number: **24315444.0**

(22) Date of filing: **26.09.2024**

(51) International Patent Classification (IPC):
**G01K 7/42** *(2006.01)* **G01K 13/02** *(2021.01)*

(52) Cooperative Patent Classification (CPC):
**G01K 7/42; G01K 13/02**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **WILO SE**
**44263 Dortmund (DE)**

(72) Inventor: **Paumelin, Marc**
**18700 Aubigny sur Nère (FR)**

(74) Representative: **Cohausz Hannig Borkowski Wißgott**
**Patentanwaltskanzlei GbR**
**Grafenberger Allee 337a**
**40235 Düsseldorf (DE)**

(54) **PROCEDURE FOR CALCULATING A CORRECTED FLUID TEMPERATURE IN A PUMP UNIT AND CORRESPONDING PUMP UNIT**

(57) The invention refers to a procedure for calculating, for a first point of time (tz), a corrected temperature ($T_{corr}(t_2)$) of a fluid pumped by a pump unit (1) having an integrated electrical temperature sensor (2) providing a signal of measured values ($T_{meas}$) of the fluid temperature, wherein the corrected temperature ($T_{corr}(t_2)$) is calculated from the measured values ($T_{meas}$) by calculating the gradient ($dT_{meas}/dt$) of the temperature from a first measured value ($T_{meas}(t_2)$) measured at the first point of time ($t_2$) and a second measured value ($T_{meas}(t_1)$) measured at a second point of time ($t_1$) that is before the first point of time ($t_2$). The corrected temperature ($T_{corr}$) is then calculated from the sum of the second measured value ($T_{meas}(t_1)$) and the gradient ($dT_{meas}/dt$), wherein the gradient ($dT_{meas}/dt$) is weighted by a factor (K). This procedure improves the response time of the temperature sensor as the corrected temperature ($T_{corr}(t_2)$), if the measured fluid temperature changes, better corresponds to the real temperature than the temperature ($T_{meas}$) measured by the sensor. For control purposes the corrected temperature ($T_{corr}(t_2)$) can be used instead of the measured temperature ($T_{meas}$). The invention also refers to a pump unit carrying out the procedure.

Fig. 4

EP 4 718 045 A1

**Description**

The present invention relates to a procedure for improving the response time of a temperature sensor in a pump unit, in particular in a circulation pump in a heating, ventilation and air conditioning (HVAC) system.

More particularly, the invention refers to a procedure for calculating, for a first point of time, a corrected temperature of a fluid pumped by a pump unit having an integrated electrical temperature sensor providing a signal of measured values of the fluid temperature, wherein the corrected temperature is calculated from the measured values. The invention also refers to a corresponding pump unit for pumping the fluid, comprising an electrical temperature sensor destined and integrated into the pump unit in such a way to provide a signal of measured values of the temperature of the fluid, and a pump electronics having an evaluation unit with a processor and a storing means for measured and calculated values.

A characteristic property of an electrical temperature sensor is the response time. The response time is a measure of the speed or of the delay with which the sensor follows the actual temperature to be measured. In other words, the response time indicates how long it takes for the sensor to react to a temperature change with a corresponding change of the sensor's signal. The response time depends on the sensor type, its electrical design and on how the sensor is integrated into the appliance. In some embodiments the response time of a temperature sensor is inacceptable low. In such a case, it is not possible, for example, to use the measured temperature in a temperature control based on the temperature measured as the control's reaction would always come too late.

It is well known in the field of HVAC systems that electrical temperature sensors in circulation pumps are used to measure the temperature of the circulated medium. Accurate measurement of this temperature is critical for effective and energy efficient control of HVAC systems. The temperature of the medium is subject to significant variations, so the rapid detection and processing of these variations is paramount. The faster these temperature changes are detected and processed, the faster the HVAC system, including the pump, can adjust to the new values, significantly improving energy efficiency of the HVAC system.

Traditionally, encapsulated media temperature sensors are placed in the system's supply or return pipes to achieve rapid detection of temperature changes, as disclosed in European patent EP 0403806 B1. These sensors are wired to the HVAC system or pump electronics. However, this installation method is complicated, vulnerable to leakage, failures and economically inefficient for the mass production of circulation pumps used in HVAC applications.

To address these issues, attempts are being made to integrate temperature sensors directly into the pump housing using a simple joining process. European patent application EP 3336361 A1, for example, discloses a pump unit for pumping a fluid in a hydraulic installation, the pump unit having an integrated sensor, i. a. for measuring fluid temperature. This integration allows for more efficient mass production and reduces the risk of leakage. The sensor is in contact with a shield that separates the pumping chamber from the stator chamber, the shield, at the location of the sensor, has an opening so as to let fluid coming in direct contact with the sensor that abuts the shield at the side of the stator chamber. However, it is also possible that the sensor contacts the shield only, i.e. without fluid contact and without an opening being present. The shield, in this case, being made of a material with a high temperature conductivity, like metal, so that the temperature of the shield is almost the same as the temperature of the fluid. However, a significant drawback of this approach is the slower response time of the temperature sensor to changes in the fluid temperature since they are not positioned directly in the flow stream of an inlet or outlet as in conventional setups.

Therefore, it is an object of the present invention to provide a method for improving the response time of a temperature sensor integrated into a circulating pump while still achieving fast response times to changes in fluid temperature. This improvement is critical to maintaining the overall energy efficiency of HVAC systems. The proposed solution seeks to overcome the drawbacks of the prior art by enhancing the sensor's ability to quickly detect temperature changes, thereby optimizing the system's response time and maintaining high operational efficiency.

This invention further aims to improve the process of integrating temperature sensors into pump units without changing their structural design and without changing their measurement location and the method of their integration into the pump unit, ensuring that they not only fit seamlessly into the existing manufacturing process for the pump, but also respond quickly enough to effectively manage the dynamic conditions of HVAC operation.

This object is solved by means of the procedure according to claim 1 as well as by means of a pump unit according to claim 8 having means for carrying out the procedure.

According to one aspect of the invention it is proposed a procedure for calculating, for a first point of time, a corrected temperature of a fluid, in particular a liquid, pumped by a pump unit having an integrated electrical temperature sensor providing a signal of measured values of the fluid temperature, wherein the corrected temperature is calculated from the measured values by calculating the gradient of the temperature from a first measured value measured at the first point of time and a second measured value measured at a second point of time that is before the first point of time, and calculating the corrected temperature from the sum of the second measured value and the gradient, wherein the gradient is weighted by a factor.

According to another aspect of the invention it is proposed a pump unit for pumping the fluid comprising the electrical temperature sensor that is destined and integrated into the pump unit in such a way to provide a signal of measured values of the temperature of the fluid, and further comprising a pump electronics having an evaluation unit with a processor and a storing means for measured and calculated values, wherein the evaluation unit is configured to execute the procedure according to the invention by calculating the corrected fluid temperature from of the measured values by means of the processor.

The basic idea of the invention rests on the characteristic response behaviour of the temperature sensor that is best visualised by a step increase in the temperature to a target value and the corresponding step response of the temperature sensor. This step response is, firstly, an exponential increase of the measured valued that decreases more and more by asymptotically approaching the target value. This is mathematically expressed by the equation: $T_{meas}(t) = T_{fina.}(1-exp(-t/\zeta))$, where $T_{meas}(t)$ is the measured temperature at the time t, $T_{final}$ is the target value and $\zeta$ is the time constant of the sensor, i.e. that time needed for the sensor until the sensor signal reaches 63,2% of the target value. Knowing this behaviour it is possible to correct a sensor's current measurement value by assuming or predicting what measurement value the sensor should actually have considering the qualitatively known measurement curve foretold by at least two measurement values from which the gradient can be calculated. Using the gradient of the temperature it is thus possible to "predict", for each new measurement value, the theoretic final temperature thanks to said equation and the assumption that the temperature response to a step increase is following the described exponential signature. This becomes apparent taking into account that the target value $T_{final}$ can be predicted from the gradient or deviation of the sensor signal, i.e. the measured temperature values, as can be seen from the following equation:

$T_{final} = dT_{meas}(t)/ dt \cdot \zeta/exp(-t/\zeta)$, wherein $dT_{meas}(t)/ dt$ is the deviation of $T_{meas}(t)$ for a time step dt.

It follows that, as the response time of a temperature sensor is generally too slow, i.e. the real temperature value is higher than the measured value if the temperature increases, and the real temperature value is lower than the measured value if the temperature decreases, it is possible to correct a measured first temperature value $T(t_2)$ at a first point of time $t_2$ by assuming a step response starting at a previously measured second temperature value $T(t_1)$ at a second point of time $t_1$ ($t_1 < t_2$), i.e. by

- calculating the theoretic actual target value $T_{final}$ of that step response, or in other words calculating the gradient of two measurement values $T(t_1)$, $T(t_2)$ and weighting it properly, and
- adding this target value $T_{final}$ to the second temperature value $T(t_1)$,

whereas this sum of actual target value $T_{final}$ and second temperature value $T(t_1)$ forms the corrected temperature $T_{corr}(t_2)$ at the first point of time.

Admittedly, using the method according to the invention, it is not possible to predict exactly the real temperature. However, the response time is significantly reduced and, consequently, improved so as to meet the market expectations.

For executing this calculation repeatedly on a processor, e.g. the processor of the pump units evaluation unit, a time discrete representation of said equation can be used. For example, calculating the corrected temperature $T_{corr}$ at a certain point of time $t_n$ can be made using the following basic equation:

$$T_{corr}(t_n) = [T_{meas}(t_n) - T_{meas}(t_{n-1})]/(t_n - t_{n-1}) \cdot K + T_{meas}(t_{n-1}),$$

where

$T_{corr}(t_n)$ is the corrected temperature at a first point of time $t_n$,
$T_{meas}(t_n)$ is the measured temperature at the first point of time $t_n$,
$T_{meas}(t_{n-1})$ is the measured temperature at a second point of time $t_{n-1}$ that is earlier than the first point of time $t_n$, and
$K$ is the factor.

Note that the temperature sensor delivers a time continuous signal of measurement values, and said signal is sampled or, in other words, digitally registered, at at least two discrete points of time prior to perform the calculation.

Preferably, the calculation of the corrected temperature $T_{corr}$ is performed not only once but repeatedly. In particular, calculation takes place repeatedly in intervals, i.e. after a certain time has lapsed, so that the corrected temperature $T_{corr}$ can be used in a temperature control or in a temperature monitoring function of the pump unit. In one embodiment, the length of the intervals can correspond to the sampling period ts with which the signal of the temperature sensor is sampled so that the corrected temperature is determined repeatedly after each sampling period, i.e. after each new measurement value. In this case the difference between the first point of time $t_n$ and the second point of time $t_{n-1}$ equals the sampling period $ts = dt = t_n - t_{n-1}$. In another embodiment, the length of the intervals can be a multiple of the sampling period so that the corrected temperature is determined repeatedly after a number of sampling periods. For example, the sensor signal can be sampled every ts = 0.5 seconds, whereas the calculation of the corrected temperature can take place every 2 seconds. Here, only every fourth measured temperature value is corrected.

Note that when calculating the corrected temperature is repeated, the second point of time in this calculation is the first point of time of the immediately preceding calculation of the corrected temperature.

The pump electronics is used to control a physical parameter of the pump, like speed, power, output pressure, pressure difference, volume flow, fluid temperature or the like according to a certain control scheme or control algorithm implemented in the pump electronics. More precisely, pump electronics usually comprise a processor and storing means on which operational software or firmware is stored that when executed on the processor, performs the control. In one embodiment the processor and storing means of the evaluation unit can be the same as said processor and storing means of the pump electronics used for the pump control. In other words, the pump electronics comprises only one processor for both controlling the pump and calculating the corrected temperature and the evaluation unit is part of the operational software or firmware. This solution takes the opportunity of the presence of a processor in the pump unit to process the temperature sensor signal. In another embodiment, however, the processor and/or the storing means of the evaluation unit can be an additional processor or additional storing means separate to the processor or storing means used for the pump control.

The factor weighting the gradient is a constant value the gradient is multiplied with. Preferably, the factor comprises a substitute parameter $\tau$ that corresponds to the sensor's time constant $\zeta$. In other word, the factor is set depending on the sensor's time constant $\zeta$.

Further preferably, the factor depends on the sampling period with which the sensor's signal is sampled.

More precisely, the factor can be given by or numerically determined from the equation $K = \dfrac{\tau}{e^{-dt/\tau}}$ in which

K    is the factor,
$\tau$    is the substitute parameter corresponding to the sensor's time constant, and
dt    the sampling period between two consecutively measured values.

For example, the sampling period is between 1s und 4s, preferably 2s.

Preferably, the value of the substitute parameter $\tau$ is between 7s und 20s, preferably 10s. In other words, the substitute parameter $\tau$ is in the lower range of possible temperature sensor response times on the field. This is to avoid overshooting of the corrected temperature.

In the meaning of the present invention, an electrical temperature sensor is to be understood as being a mere electrical component, such as a temperature depending resistance. More precisely, the electrical temperature sensor lacks electronic components such as, for example, a signal processor, an analog-digital converter, an amplifier, filter or storage means. The temperature sensor according to the present invention thus need to be connected to an external electronics in order to process and evaluate the sensor's signal. This external electronics is, in the present case, the pump electronics to which the sensor is electrically connected for supplying its unprocessed, native sensor signal. For example, the sensor can be a PTC (Positive Temperature Coefficient), NTC (Negative Temperature Coefficient) or a platinum element like a PT-100 or PT-1000.

Further features, characteristics, effects and advantages of the invention are explained in more detail hereinafter with reference to examples of embodiments and the accompanying figures. The reference signs contained in the figures retain their meaning from figure to figure. In the figures, reference signs always denote the same or equivalent components, areas, directions or locations as far as specified otherwise.

It should be noted that in the context of the present description the terms "comport", "comprise" or "include" in no way exclude the presence of other features. Furthermore, the use of the indefinite article for an object does not exclude the plural of said object.

Furthermore, the terms or phrases "radial", "axial" and "circumferential" used in this description generally refer to the longitudinal axis of the pump that corresponds to the rotational axis of the pump shaft, unless otherwise stated.

Brief description of the drawings:

Fig. 1:    shows an exploded view of a pump unit according to the state of the art
Fig. 2:    shows an assembled portion the pump unit according to figure 1
Fig. 3:    shows three idealized temperature curves in a common diagram, an actual temperature curve, a calculated temperature curve and a measured temperature curve
Fig. 4:    shows three real temperature curves in a common diagram, an actual temperature curve, a calculated temperature curve and a measured temperature curve

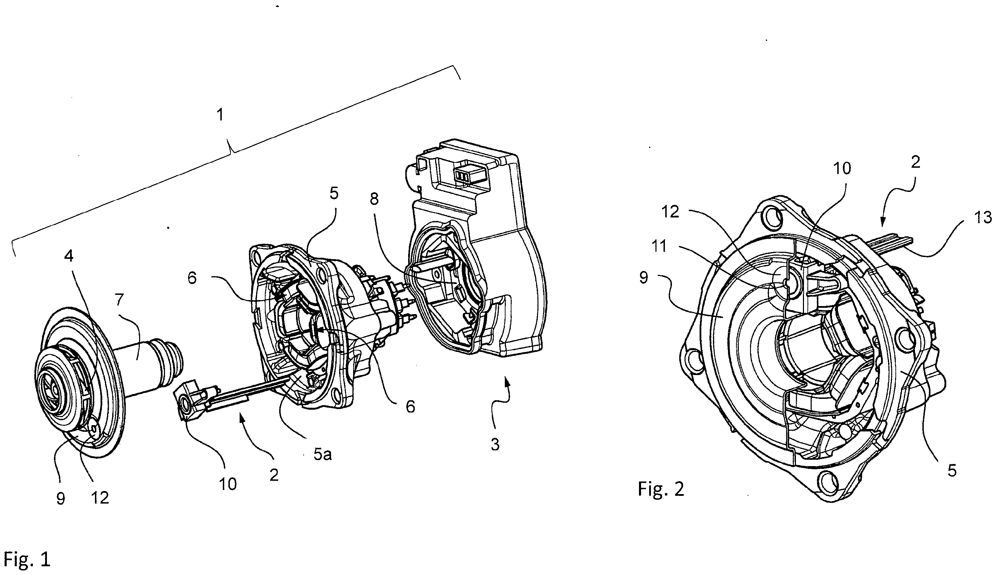

Figure 1 shows an exploded view of a pump unit 1 for pumping a fluid, or more precisely a liquid, in an hydraulic installation such as a heating or cooling circuit. Thus, the pump unit 1 is a so-called heating pump or cooling pump. The pump unit 1 comprises a sensor 2 that is destined and integrated into the pump unit 1 in such a way to provide a signal of measured values of the temperature of the fluid. The pump unit 1 further comprises a circulation pump, an electric motor driving the circulation pump and a pump electronics 3. These components are assembled to structurally form one single unit. In other words, the electric motor is fixed to the circulation pump (hydraulic body), and the pump electronics is attached to the electric motor.

The circulation pump comprises a pump housing delimiting a pump chamber and an impeller 4 that is arranged rotatably inside the pump chamber. Note that the pump housing is omitted in figures 1 and 2. In operation, the impeller is rotatably driven and thereby pressurises the fluid so as to pumping it from a suction opening of the pump chamber to a discharge opening of the pump chamber in the pump housing.

The pump electronics 3 is in the form of a housing accommodating an electronic control unit comprising a printed circuit board with electronic components controlling the operation of the electric motor of the pump unit 1. The electric motor comprises a motor housing 5, a permanent magnet rotor and a stator 6. Note that the rotor is not visible in figure 1 as it is contained inside a rotor chamber of a so-called can 7 that hermetically separates the stator 6 and the rotor from each other. The motor housing delimits a stator chamber 5a inside which the stator 6 is arranged in order to protect it. More precisely, the stator 6 comprises an electrical portion in form of a set of coils, and a mechanical portion in form of a carcass whereas the coils are arranged annularly on the carcass and around the can 7 that is, in its assembled state, inserted into a central bore of the carcass thereby separating the stator chamber 5a from the rotor chamber in radial direction. The rotor is mechanically coupled to the impeller 4 in order to drive it if the set of coils is energized. The rotor chamber is filled with the fluid to be pumped. Such construction of a pump unit 1 is called "wet running motor pump" or "canned motor pump" as the rotor runs in the fluid. At a first axial end, the stator chamber 5a is limited by a wall 8 that is, here, a portion of the housing of the pump electronics 3. Alternatively, said wall can be a portion of the motor housing 5 or a part of both, the pump electronics 3 and the motor housing 5. At a second axial end, opposite to the first axial end, a flange-like shield 9 integrally formed with the can 7 delimits the stator chamber 5a so as to prevent fluid from the pump chamber to get in contact with the coils.

The sensor 2, whose function is to measure a temperature is mechanically arranged within the stator chamber 5a. Furthermore, the sensor 2 is electrically connected to the pump electronics 3 to transmit to it measured values. More precisely, the sensor 2 is configured to measure the temperature of the fluid by means of a temperature sensitive element located at the head 10 of the sensor 2. The sensor 2 delivers a signal of measured values that are sampled in the pump electronics 3 and processed by an evaluation unit that is part of the pump electronics 3. For a direct measurement of the fluid temperature, the shield 9 presents in an area 12 an opening 11 that communicates between the pump chamber and the stator chamber. The sensor 2 is arranged such that its head 10 sealingly abuts the shield 9 on the side of the stator chamber in the area 12 so that the temperature sensitive element covers the opening 11 in order to get in direct contact with the fluid for measuring its temperature.

Figure 2 shows the electric motor in its assembled state with the can 7 being inserted into the central bore of the stator 6 and the shield 9 closing the stator chamber. However, a half of the shield 9 is omitted to give view on the sensor 2 inside the motor housing 5. Furthermore, the pump electronics 3 is omitted for the sake of simplicity and to give view to connection means 13 of the sensor 2 configured to connect the sensor 2 to the pump electronics 3 in order to transmit the measured values. These connection means 13 are in form of a plug or in form of electrical tracks on a circuit board to realize a plug-in connection when the pump electronics 3 is mounted at the axial face of the motor housing 5.

The sensor 2 is a mere electrical component, i.e. without any electronic components. For example, the sensor 2 can be a temperature depending resistance like a PTC (Positive Temperature Coefficient), NTC (Negative Temperature Coefficient) or a platinum element like a PT-100 or PT-1000.

According to the invention, the pump unit 1 further comprises, as part of the pump electronics 3, an evaluation unit with a processor and a storing means for measured and calculated values. The evaluation unit is configured to execute a procedure for calculating from the measured values, and for a first point of time $t_2$, a corrected temperature $T_{corr}(t_2)$ of the fluid pumped by the pump unit 1. This is done by means of the processor that calculates the gradient $dT_{meas}/dt$ of the temperature from a first measured value $T_{meas}(t_2)$ measured at the first point of time $t_2$ and a second measured value $T_{meas}(t_1)$ measured at a second point of time $t_1$ that is before the first point of time $t_2$, and calculating the corrected temperature $T_{corr}(t_2)$ from the sum of the second measured value $T_{meas}(t_1)$ and the gradient $dT_{meas}/dt$, wherein the gradient $dT_{meas}/dt$ is weighted by a factor K.

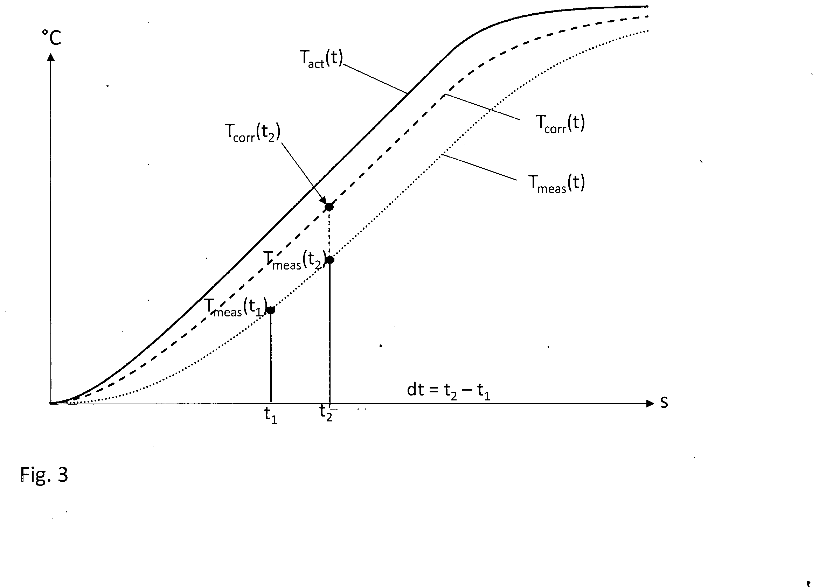

Figure 3 shows a temperature over time diagram containing three idealized curves, namely

-    a first curve $T_{act}(t)$ (continuous line) describing the real temperature of the fluid over the time t,
-    a second curve $T_{meas}(t)$ (dotted line) describing a measured temperature of the fluid over the time t, wherein the measured values are those delivered by the sensor 2, and
-    a third curve $T_{corr}(t)$ (broken line) describing the corrected temperature over the time t, calculated from the measured values using the procedure according to the invention.

In figure 3 it is pointed out a measured value $T_{meas}(t_2)$ at a first point of time $t_2$ that is corrected to a new value $T_{corr}(t_2)$ by means of the invention. As can be generally seen, the measured temperature $T_{meas}(t)$ is, at every point of time t, lower than the real temperature $T_{act}(t)$. That is because the sensor 2 has a certain response time that becomes manifest in a delay in the sensor signal when responding to a certain temperature change. This response time is quantified by a time constant $\zeta$ that is characteristic for the temperature sensor 2.

Considering a step function of the real temperature $T_{act}(t)$ jumping to a target value $T_{final}$, the temperature sensor's signal follows a typical exponential increase. This is mathematically expressed by the equation: $T_{meas}(t) = T_{final} - (1-exp(-t/\zeta))$. Thus, the time constant $\zeta$ of the sensor 2 is that time needed for the sensor 2 until the sensor signal reaches 63,2% of the target value $T_{final}$. Further considering the fact that the deviation $T_{meas}(t)'$ of the step response is $T_{meas}(t)' = T_{final}/\zeta \cdot exp(-t/\zeta)$, you can determine the target value $T_{final}$ from $T_{final} = Tmeas(t)' \cdot \zeta / exp(-t/ \zeta)$.

Knowing this behaviour, it is possible to correct a measured first temperature value $T_{meas}(t_2)$ at a first point of time $t_2$ by assuming a step response would occur starting at a second temperature value $T_{meas}(t_1)$ previously measured at a second point of time $t_1$ ($t_1 < t_2$), and in particular by calculating the theoretic actual target value $T_{final}$ of that step response and then adding this target value $T_{final}$ to the second temperature value $T_{meas}(t_1)$. This sum of actual target value $T_{final}$ and the second temperature value $T_{meas}(t_1)$ forms the corrected temperature $T_{corr}(t_2)$ at the first point of time $t_2$. As the target value $T_{final}$ can be calculated from the deviation of the step response, the target value equals the gradient of two measurement values $T_{meas}(t_2)$, $T_{meas}(t_1)$ weighted properly, namely by the factor K, This is mathematically expressed by the equation

$$T_{corr}(t_2) = T_{final}(t_1,t_2) + T_{meas}(t_1) \quad \text{with } T_{final}(t_1,t_2) = [T_{meas}(t_2) - T_{meas}(t_1)]/(t_2 - t_1) \cdot K.$$

A value for the factor K can be chosen in consideration of the above mentioned equation $T_{final} = Tmeas(t)' \cdot \zeta / exp(-t/ \zeta)$, according to which a proper weighting factor K results when choosing it as $K = \zeta / exp(-dt/ \zeta)$, where dt is the time difference between the first point of time $t_2$ and the second point of time $t_1$. As the sensor's real time constant $\zeta$ is not known, it must be estimated. For that, formally, a substitute parameter $\tau$ is used as sensor's time constant and varied in $K = \tau / exp(-dt/ \tau)$ when performing certain tests until an appropriate value of K is found. Basically, the value of the substitute parameter $\tau$ is between 7s und 20s. However, the higher the substitute parameter $\tau$ is chosen, the higher is the risk that the corrected temperature $T_{corr}(t)$ overshoots the actual temperature $T_{act}(t)$. General conclusions are:

- The closer the substitute parameter $\tau$ is to the real time constant $\zeta$, the better is the measured temperature corrected, i.e. the lower is the distance between $T_{corr}(t)$ and $T_{act}(t)$.
- If the substitute parameter $\tau$ is higher than the real time constant $\zeta$, the corrected temperature $T_{corr}(t)$ overshoots the real temperature $T_{act}(t)$.
- The substitute parameter $\tau$ should be the closest possible to the minimum value of temperature sensor's spread.

Good results with no overshooting but improving the response time were found, when using a substitute parameter $\tau$ of approximately 10 seconds for K.

Furthermore, good results were found using a time difference between the first point of time $t_2$ and the second point of time $t_1$ of 2 seconds. This time difference $dt = t_2 - t_1$ is preferably also the sampling period used for sampling the sensor signal in the pump electronics, as the temperature sensor 2 delivers a time continuous signal of measurement values.

For repeatedly calculating the corrected temperature $T_{corr}(t_n)$, a numeric, time discrete representation of the equation above is used:

$$T_{corr}(t_n) = [T_{meas}(t_n) - T_{meas}(t_{n-1})]/(t_n - t_{n-1}) \cdot K + T_{meas}(t_{n-1}),$$

where

$T_{corr}(t_n)$ is the corrected temperature at a first point of time $t_n$,
$T_{meas}(t_n)$ is the measured temperature at the first point of time $t_n$,
$T_{meas}(t_{n-1})$ is the measured temperature at a second point of time $t_{n-1}$ that is earlier than the first point of time $t_n$, and
K is the factor.

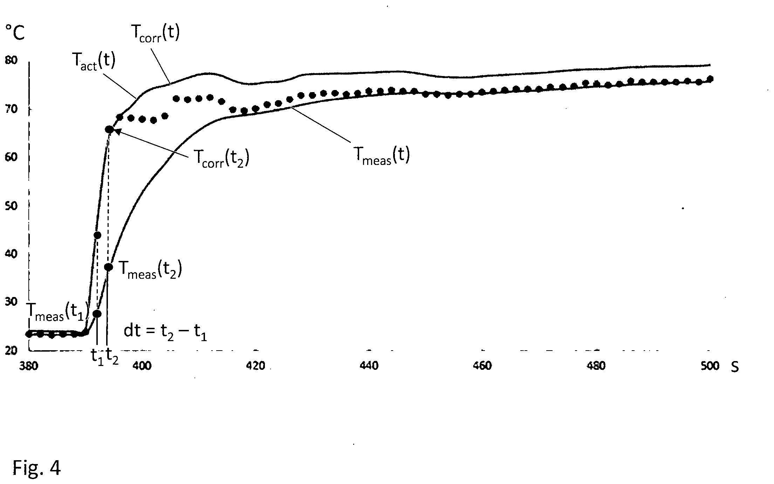

In figure 4, in correspondence to figure 3, another temperature over time diagram containing three curves of $T_{act}(t)$, $T_{meas}(t)$ and $T_{corr}(t)$ is shown. Here, however, these curves $T_{act}(t)$, $T_{meas}(t)$ and $T_{corr}(t)$ are real ones.

The measured value $T_{meas}(t_2)$ of 36,12°C at a first point of time $t_2$ is corrected to a new value $T_{corr}(t_2)$ of 66,18°C by means of the calculation according to the invention using the measured value $T_{meas}(t_1)$ of 27,9°C at a second point of time $t_1$, a sampling time dt of 2 seconds between the first point of time $t_2$ and second point of time $t_1$ and a substitute parameter $\tau$ for the time constant of 7s: $T_{corr}(t_2)$ = (36,12°C - 27,9°C)/2s · 7s/exp(-2s/7s) + 27,9°C = 66,18°C.

As can be seen in figure 4, using the method according to the invention, the corrected temperature values $T_{corr}(t)$ do not exactly match the real temperature $T_{act}(t)$ at every point of time. However, at least at the very beginning of the step-like temperature increase there is a good match and, consequently, the response time of the sensor 2 is significantly reduced.

It should be noted that the foregoing description is given by way of example only for the purpose of illustration and is in no way limiting the scope of protection of the invention. Features of the invention indicated as "may", "exemplary", "preferred", "optional", "ideal", "advantageous", "optionally", "suitable" or the like are to be regarded as purely optional and likewise do not limit the scope of protection, which is defined exclusively by the claims. To the extent that the foregoing description mentions elements, components, process steps, values or information having known, obvious or foreseeable equivalents, such equivalents are covered by the invention as well. Likewise, the invention includes any changes, variations or modifications to embodiments which involve the substitution, addition, alteration or omission of elements, components, process steps, values or information, so long as the basic idea of the invention is still present, regardless of whether the change, variation or modification results in an improvement or deterioration of an embodiment.

Although the above description of the invention mentions a plurality of physical, non-physical or procedural features in relation to one or more specific embodiment(s), these features may also be used in isolation from this specific embodiment, at least to the extent that they do not require the mandatory presence of other features. Conversely, features mentioned in relation to one or more specific embodiment(s) may be combined as desired with each other as well as with further disclosed or undisclosed features of shown or non-shown embodiments, at least insofar as the features are not mutually exclusive or do not lead to technical incompatibilities.

## Claims

1. Procedure for calculating, for a first point of time ($t_2$), a corrected temperature ($T_{corr}(t_2)$) of a fluid pumped by a pump unit (1) having an integrated electrical temperature sensor (2) providing a signal of measured values ($T_{meas}$) of the fluid temperature, wherein the corrected temperature ($T_{corr}(t_2)$) is calculated from the measured values ($T_{meas}$), **characterized by** calculating the gradient ($dT_{meas}/dt$) of the temperature from a first measured value ($T_{meas}(t_2)$) measured at the first point of time ($t_2$) and a second measured value ($T_{meas}(t_1)$) measured at a second point of time ($t_1$) that is before the first point of time ($t_2$), and calculating the corrected temperature ($T_{corr}$) from the sum of the second measured value ($T_{meas}(t_1)$) and the gradient ($dT_{meas}/dt$), wherein the gradient ($dT_{meas}/dt$) is weighted by a factor (K).

2. Procedure according to claim 1, **characterized in that** the factor (K) comprises a substitute parameter ($\tau$) that corresponds to the sensor's time constant.

3. Procedure according to claim 1 or 2, **characterized in that** the factor (K) depends on the sampling period (dt) with which the sensor's signal is sampled.

4. Procedure according to claim 1 or 2 or 3, **characterized in that** the factor (K) is given by the equation $K = \dfrac{\tau}{e^{-dt/\tau}}$ in which

   K is the factor,
   $\tau$ is a substitute parameter corresponding to the sensor's time constant, and
   dt the sampling period between two consecutively measured values.

5. Procedure according to claim 3 or 4, **characterized in that** the sampling period (dt) is between 1s und 4s, preferably 2s.

6. Procedure according to claim 2 or 4, **characterized in that** the value of the substitute parameter ($\tau$) is between 7s und 20s, preferably 10s.

7. Procedure according to one of the foregoing claims, **characterized in that** the corrected temperature ($T_{corr}$) is determined repeatedly in intervals, preferably after each sampling period (dt) or a number of sampling periods (dt).

8. Pump unit (1) for pumping a fluid comprising

   - an electrical temperature sensor (2) that is destined and integrated into the pump unit (1) in such a way as to provide a signal of measured values of the temperature of the fluid,
   - a pump electronics (3) having an evaluation unit with a processor and a storing means for measured and calculated values,

   **characterized in that** the evaluation unit is configured to execute the procedure according to one of the foregoing claims by calculating a corrected temperature ($T_{corr}$) of the fluid from of the measured values ($T_{meas}$) by means of the processor.

Fig. 1

Fig. 2

EP 4 718 045 A1

Fig. 3

Fig. 4

Europäisches
Patentamt

European
Patent Office

Office européen
des brevets

# EUROPEAN SEARCH REPORT

Application Number

EP 24 31 5444

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 8 136 983 B2 (RAZZAGHI MAHMOUD [US]) 20 March 2012 (2012-03-20) * abstract * * column 1, line 66 - column 2, line 15 * * column 2, lines 19-25, 33-60 * * column 3, lines 1-4 * ----- | 1-8 | INV. G01K7/42 G01K13/02 |
| A,D | EP 0 403 806 B1 (OPLAENDER WILO WERK GMBH [DE]) 24 February 1993 (1993-02-24) * abstract * * the whole document * ----- | 1-8 | |

TECHNICAL FIELDS
SEARCHED (IPC)

G01K

The present search report has been drawn up for all claims

| Place of search | Date of completion of the search | Examiner |
|---|---|---|
| The Hague | 13 March 2025 | Bagnera, Carlo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 31 5444

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | | Publication date | Patent family member(s) | | Publication date |
|---|---|---|---|---|---|
| US 8136983 | B2 | 20-03-2012 | NONE | | |
| EP 0403806 | B1 | 24-02-1993 | AT | E86012 T1 | 15-03-1993 |
| | | | DE | 3920185 A1 | 10-01-1991 |
| | | | DK | 0403806 T3 | 14-06-1993 |
| | | | EP | 0403806 A1 | 27-12-1990 |
| | | | ES | 2038019 T3 | 01-07-1993 |

EPO FORM P0459

For more details about this annex : see Official Journal of the European Patent Office, No. 12/82

**EP 4 718 045 A1**